# EUROPEAN PATENT SPECIFICATION

(11) **EP 1 378 672 B1**
(45) Date of publication and mention of the grant of the patent: **30.03.2005**
(21) Application number: 03101965.6
(22) Date of filing: 01.07.2003
(51) Int. Cl.: F16B 37/04

(54) **Screw connecting means, especially for grooved profile elements**
Schraubenverbindung, insbesondere für geschlitzte Profilschienen
Boulonnage, en particulier pour des rails de profil fendus

(30) Priority: 04.07.2002 DE 10230144
(43) Date of publication of application: 07.01.2004
(73) Proprietor: Bosch Rexroth AG, 70184 Stuttgart (DE)
(72) Inventor: Essinger, Jacob, 12553, Alvsjö (SE)
(74) Representative: Kietzmann, Lutz

(56) References cited:
- EP-A- 1 174 553
- US-A- 4 488 844

## Description

### Field of the invention

The present invention relates to screw connecting means, especially for mounting grooved profile elements onto one another. Such grooved profile elements are widely used as constructing profiles for material handling systems or as a housing for pneumatic cylinders, for example.

### Description of related art

The utility model publication DE 6601322 U1 discloses screw connecting means. In order to mount a flat single part onto a profile element with a T-groove, a sliding crank block with a central threaded through hole is provided. The flat single part is also provided with an unthreaded hole. A screw element is inserted through the hole of the flat single part and is screwed into the threaded through hole of the sliding crank block in order to fix the flat single part onto the grooved profile element.

These connecting means are suitable to mount single parts of various forms on a profile element as a holder. Therefore, each single part has to have a drilled through hole for the screw element.

Patent publication DE 38 29 998 A1 discloses special connecting means with which a grooved profile element is fixable to another grooved profile element and where through bores on both profile elements are not necessary. Instead of a through bore, both profile elements are provided with a T-groove. The connecting means comprise an I-shaped double-crank block with two parallel grooves arranged opposite to one another which form a small middle part. The thickness of the small middle part is adapted to the opening slit of the T-groove of each profile element. The I-shaped double-crank block is provided with an axial bore for a screw element. When the screw element is turned in the axial bore, the deformable small middle part of the double-crank block pressed against the edges of the opening slits of both grooved profile elements to mount both profile elements parallel to one another.

Since the double-crank block is in one piece, it is impossible to vary the mounting angle between the first grooved profile element and the second grooved profile element. Furthermore, these connecting means are not suitable to withstand high forces.

It is an object of the present invention to provide connecting means for flexibly mounting two grooved profiles onto one another wherein various angles between both profile axis are possible.

### Summary of the invention

This object is achieved in the screw connecting means of claim 1. Thus the invention provides screw connecting means, especially for mounting grooved profile elements onto one another, comprising a screw element with a threaded end section and a screw head, a lower sliding crank block with a threaded through hole which corresponds with the threaded end section of the screw element, and an upper sliding crank block with a through hole which rotatably correspond to the screw head of the screw element, wherein the distance between both crank blocks is adjustable when turning the screw element.

These screw connecting means provide a flexible mounting solution for two grooved profile elements, rendering through bores on both profile elements unnecessary. Because of the screw principle of the invention, high connecting forces are possible. It is also possible to mount the profile elements onto one another wherein various angles between both profile axis are possible, since both crank blocks are rotatable around the axis of the screw element.

According to an advantageous embodiment, the screw element is provided with an untrue shaped middle section. The untrue shaped middle section corresponds to a untrue shaped through hole of a nut element for easy turning of the screw element. Preferably, the nut element is available in various thicknesses in order to define various mounting distances between both profile elements.

Advantageously, each crank block is provided with two parallel crank sections. These crank sections are exactly adapted to the T-groove shape of the profile elements in order to avoid a gap between these connecting parts. It is generally possible to adapt the crank sections of the crank blocks to different shaped grooves, for example to a dovetail- groove.

According to a further advantageous embodiment, at least both crank blocks and the screw element are made of a steel material, since these parts have to transmit the connecting force generated by turning the screw. Alternatively, the nut element might be made of suitable plastics material in order to avoid damage to the outer surface of the profile element.

The foregoing and other aspects will become apparent from the following detailed description of the invention when considered in conjunction with the enclosed drawings.

### Brief description of the drawings

- Figure 1: shows a perspective view of screw connecting means according to the present invention in the mounted state,
- Figure 2: shows a side view of two grooved profile elements which are mounted onto one another with the screw connecting means of Figure 1,
- Figure 3a: shows a perspective view of a screw element of the screw connecting means of Figure 1,
- Figure 3b: shows a perspective view of a lower sliding crank block of the screw connecting means of Figure 1,
- Figure 3c: shows a perspective view of an upper sliding crank block of the screw connecting means of Figure 1, and
- Figure 3d: shows a perspective view of a nut element for turning the screw element of Figure 3a.

### Description of a preferred embodiment

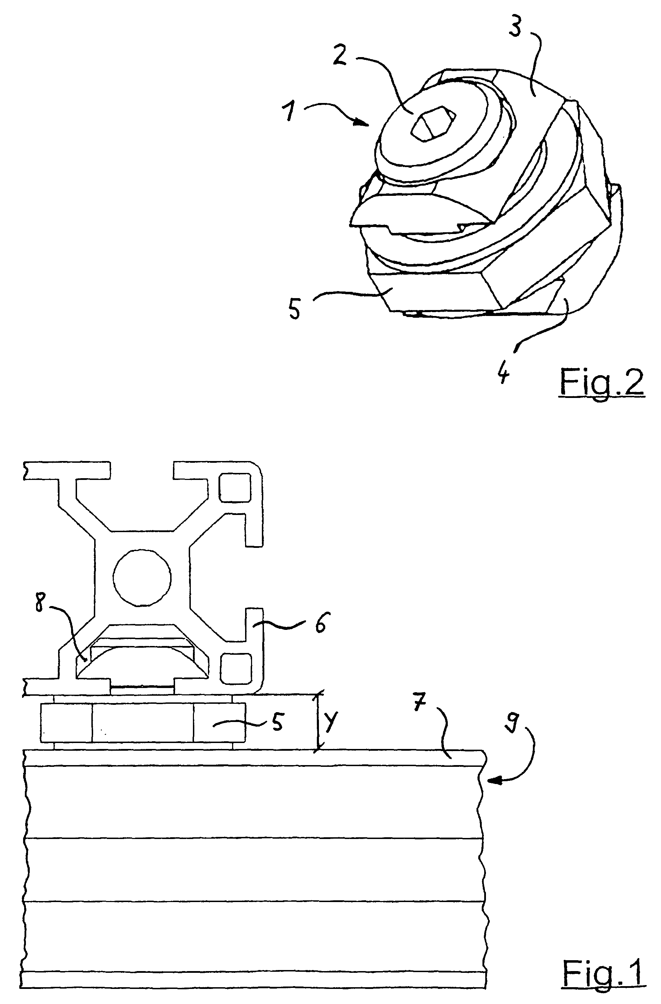

The screw connecting means as shown in *Figure 1* are completely made of steel. They comprise a central screw element 1 with a screw head 2. The screw head 2 is in the shape of a cylindrical internal wrenching head. The screw head 2 corresponds with an upper sliding crank block 3 which is rotatably arranged within the axis of the screw element 1.
Furthermore, a lower sliding crank block 4 is provided as a kind of screw socket which the screw element 1 is screwed into. Additionally, the screw element 1 is provided with a nut element 5 which is arranged between both crank blocks 3 and 4 and which is fixed to the screw element 1 for turning the screw element 1 in order to change the distance X between both crank blocks 3 and 4.

According to *Figure 2* a first grooved profile element 6 is mounted at a 90°-angle to a second grooved profile element 7 via the screw connecting means as described above. The thickness of the nut element 5 of the screw connecting means defines the mounting distance Y between the first grooved profile element 6 and the second grooved profile element 7. Both profile elements 6 and 7 are provided with T-grooves 8 and 9 respectively.

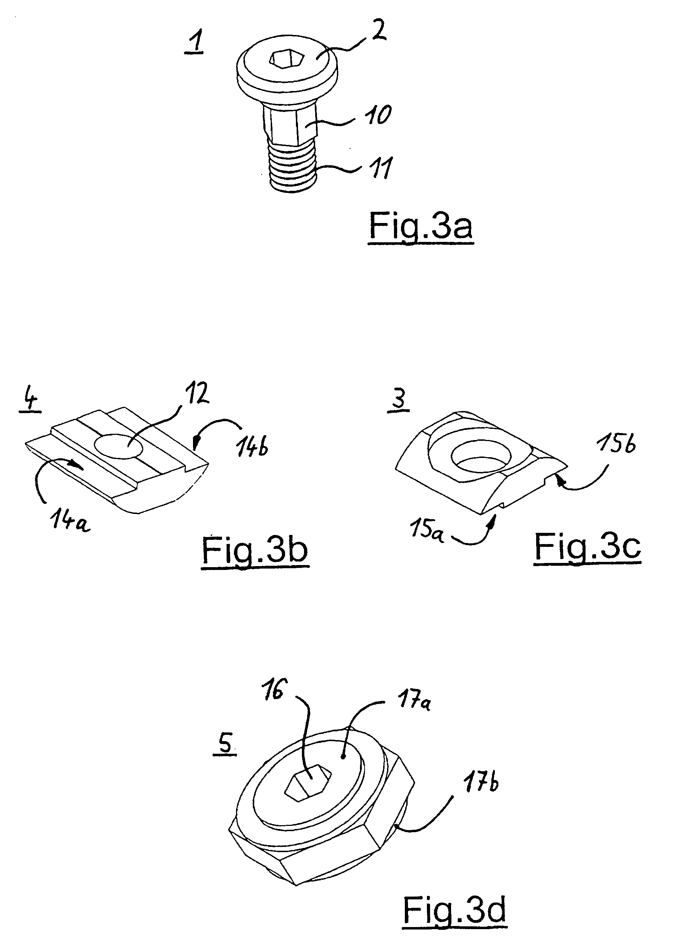

The screw element 1 according to *Figure 3a* with a screw head 2 is provided with an untrue, esp. polygonal, shaped middle section 10. Furthermore, the screw element 1 comprises a metrical threaded end section 11. The threaded end section 11 of the screw element 1 corresponds to a threaded through hole 12 of the lower sliding crank block 4 according to *Figure 3b.* According to *Figure 3c* the upper sliding crank block 3 is provided with a central through hole 13 which rotatable corresponds with the screw head 2 of the screw element 1. Each sliding crank block 3 and 4 is provided with two parallel crank sections 14a, 14b and 15a, 15b respectively which are adapted to the T-groove of the respective profile elements not shown. The nut element 5 of *Figure 3d* comprises a central polygonal shaped through hole 16 which corresponds to the polygonal shaped middle section 10 in order to turn the screw element 1. Furthermore, each front sides of the nut element 5 is provided with an annular coaxial centering edge 17a, 17b. Both centering edges 17a, 17b correspond with a - not shown - drilled hole in the T-groove's 8, 9 opening slits in order to provide an additional positive- fit connection between the connecting parts.

The present invention is not limited by the embodiment described above which is represented as an example only and can be modified in various ways within the scope of protection defined by the appended patent claims. Thus the invention is also applicable to groove forms other than a T- groove.

### Reference Numbers

- **1**: screw element
- **2**: screw head
- **3**: upper sliding crank block
- **4**: lower sliding crank block
- **5**: nut element
- **6**: first profile element
- **7**: second profile element
- **8**: T-groove
- **9**: T-groove
- **10**: middle section
- **11**: threaded end section
- **12**: threaded through hole
- **13**: through hole
- **14**: crank section
- **15**: crank section
- **16**: through hole
- **17**: centering edge

## Claims

1. Screw connecting means, especially for mounting grooved profile elements (6, 7) onto one another, comprising:
- a screw element (1) with a threaded end section (11) and a screw head (2),
- a lower sliding crank block (4) with a threaded through hole (12) which corresponds to the threaded end section (11) of the screw element (1),
- an upper sliding crank block (3) with a through hole (13) which rotatable corresponds to the screw head (2) of the screw element (1),
- wherein the distance between both crank blocks (3, 4) is adjustable when turning the screw element (1), **characterized in that**
- the screw element (1) is provided with an untrue shaped middle section (10) which corresponds to a respective through hole (16) of the nut element (5) for turning the screw element (1),
- each front side of the nut element (5) is provided with an annular coaxial centering edge (17a, 17b) which corresponds with a hole drilled into the opening slit of the T-groove (8, 9) in order to provide an additional positive-fit connection.

2. Screw connecting means according to claim 1,
**characterized in that**
the nut element (5) is available in various thicknesses in order to define the mounting distance (Y).

3. Screw connecting means according to claim **1,**
**characterized in that**
each crank block (3, 4) is provided with two parallel crank sections (14a, 14b; 15a, 15b) which are adapted to a T-groove (8, 9) of a profile element (6, 7).

4. Screw connecting means according to claim 1,
**characterized in that**
the screw head (2) is shaped as a cylindrical internal wrenching head.

5. Screw connecting means according to one of the foregoing claims,
**characterized in that**
at least both crank blocks (3, 4) and the screw element (1) are made of steel.

## Patentansprüche

1. Schraubenverbindungsmittel, vorzugsweise für die Montage genuteter Profilelemente (6, 7) aufeinander, umfassend:
- ein Schraubenelement (1) mit einem Gewindeendteil (11) und einem Schraubenkopf (2),
- ein unteres Absatzgleitstück (4) mit einem Gewindedurchgang (12), welches mit dem Gewindeendteil (11) des Schraubenelements (1) zusammenwirkt,
- ein oberes Absatzgleitstück (3) mit einer Durchgangsbohrung (13), die drehbar zusammenwirkt mit dem Schraubenkopf (2) des Schraubenelements (1),
- wobei der Abstand zwischen den beiden Absatzgleitstücken (3, 4) durch die Drehung des Schraubenelements (1) einstellbar ist,
**dadurch gekennzeichnet, dass**
- das Schraubenelement (1) mit einem unrund geformten Mittelteil (10) ausgestattet ist, welches mit einer zugehörigen Durchgangsbohrung (16) des Schraubenmutterelements (5) zur Drehung des Schraubenelements (1) zusammenwirkt,
- jede Vorderseite des Schraubenmutterelements **(5)** mit einem ringförmig koaxialen Zentrierabschnitt (17a, 17b) ausgestattet ist, welcher mit einem in den geöffneten Schlitz der T-Nut (8, 9) gebohrten Loch zusammenwirkt, um zusätzlich eine formschlüssige Verbindung zu schaffen.

2. Schraubenverbindungsmittel gemäß Anspruch 1,
**dadurch gekennzeichnet,**
**dass** das Schraubenmutterelement **(5)** in verschiedenen Dicken verfügbar ist, um den Montageabstand **(Y)** zu bestimmen.

3. Schraubenverbindungsmittel gemäß Anspruch 1,
**dadurch gekennzeichnet,**
**dass** jedes Absatzgleitstück **(3, 4)** zwei parallele Absatzstücke **(14a, 14b, 15a, 15b)** aufweist, welche an die T-Nut **(8, 9)** des Profilelements **(6, 7)** angepasst sind.

4. Schraubenverbindungsmittel gemäß Anspruch 1,
**dadurch gekennzeichnet,**
**dass** der Schraubenkopf **(2)** mit einem Innensechskant ausgeführt ist.

5. Schraubenverbindungsmittel gemäß Anspruch 1,
**dadurch gekennzeichnet,**
**dass** mindestens ein Absatzgleitstück (3, 4) und das Schraubenelement (1) aus Stahl hergestellt sind.

## Revendications

1. Système de connexion à vis, spécialement pour monter des éléments profilés rainurés (6, 7) l'un sur l'autre, comprenant :
-- un élément à vis (1) avec un tronçon terminal fileté (11) et une tête de vis (2),
-- un bloc de serrage inférieur coulissant (4) avec un trou traversant taraudé (12) qui correspond au tronçon terminal fileté (11) de l'élément à vis (1),
-- un bloc de serrage supérieur coulissant (3) avec un trou traversant (13) qui correspond en rotation à la tête de vis (2) de l'élément à vis (1), de telle façon que la distance entre les deux blocs de serrage (3, 4) est ajustable lorsqu'on fait tourner l'élément à vis (1),
**caractérisé en ce que** :
-- l'élément à vis (1) est pourvu d'un tronçon médian (10) avec une forme excentrée, qui correspond à un trou traversant respectif (16) de l'élément à écrou (5) pour faire tourner l'élément à vis (1), et
-- chaque côté frontal de l'élément à écrou (5) est pourvu d'une bordure de centrage annulaire coaxiale (17a, 17b) qui correspond à un trou percé dans la fente d'ouverture de la rainure en T (8, 9) afin d'assurer une connexion additionnelle à blocage positif.

2. Système de connexion à vis selon la revendication 1,
**caractérisé en ce que** l'élément à écrou (5) est disponible en diverses épaisseurs afin de définir la distance de montage (Y).

3. Système de connexion à vis selon la revendication 1,
**caractérisé en ce que** chaque bloc de serrage (3, 4) est doté de deux tronçons de serrage parallèles (14a, 14b ; 15a, 15b) qui sont adaptés à une rainure en T (8, 9) d'un élément profilé (6, 7).

4. Système de connexion à vis selon la revendication 1,
**caractérisé en ce que** la tête de vis (2) est conformée à la manière d'une tête cylindrique à empreinte interne.

5. Système de connexion à vis selon l'une des revendications précédentes,
**caractérisé en ce que** les deux blocs de serrage (3, 4) et l'élément à vis (1) au moins sont réalisés en acier.
